# EUROPÄISCHE PATENTSCHRIFT

(11) **EP 3 393 683 B1**
(45) Veröffentlichungstag und Bekanntmachung des Hinweises auf die Patenterteilung: **01.03.2023**
(21) Anmeldenummer: 16816623.9
(22) Anmeldetag: 12.12.2016
(51) Int. Cl.: B08B 1/04, B60S 3/06, F03D 80/55, B08B 1/02

(54) **VORRICHTUNG UND VERFAHREN ZUM REINIGEN ODER FEINBEARBEITEN VON WERKSTUECKEN**
APPARATUS AND METHOD FOR THE CLEANING OR PRECISION MACHINING OF WORKPIECES
DISPOSITIF ET PROCÉDÉ DE NETTOYAGE OU DE FINISSAGE DE PIÈCES

(30) Priorität: 21.12.2015 DE 102015122388
(43) Veröffentlichungstag der Anmeldung: 31.10.2018
(73) Patentinhaber: Pflueger Praezision GmbH, 71665 Enzweihingen (DE)
(72) Erfinder: BUTZ, Peter, 75428 Illingen (DE); PYTKOWJAT, Michael, 74379 Ingersheim (DE)
(74) Vertreter: Witte, Weller & Partner Patentanwälte mbB
(86) Internationale Anmeldenummer: PCT/EP2016/080648
(87) Internationale Veröffentlichungsnummer: WO 2017/108480

(56) Entgegenhaltungen:
- EP-A1- 0 808 753
- WO-A1-2010/089143
- FR-A1- 2 635 024
- US-A- 3 601 832

## Beschreibung

Die Erfindung betrifft eine Vorrichtung zum Reinigen oder Feinbearbeiten von Werkstücken, mit einem Gehäuse, an dem ein Anschluss zur Verbindung mit einer Handlingeinrichtung vorgesehen ist, mit einem Antriebsmotor zum Antrieb mindestens zweier Walzen zur Behandlung eines Werkstücks, wobei die Walzen jeweils eine Abdeckung aufweisen, mit einer Absaugeinrichtung gekoppelt sind und relativ zueinander verstellbar sind, und wobei eine mittlere Walze an ihren beiden Enden mittels Drehlagern an Trägern gelagert ist.

Eine derartige Vorrichtung ist aus der WO 2010/089143 A1 bekannt, die eine Vorrichtung gemäß dem Oberbegriff des Anspruchs 1 offenbart.

Kraftfahrzeugkarosserien, auch Rohkarossen genannt, werden heutzutage üblicherweise auf vollautomatischen Fertigungsstraßen lackiert. Hierzu wird zunächst eine Tauchgrundierung auf der Rohkarosse aufgetragen, anschließend erfolgt die Auftragung eines Füllers und schließlich die Auftragung der Lackierung. Im Stand der Technik werden die Rohkarosserien vor dem Lackieren durch großvolumige Blechkabinen geleitet (bei Pkw-Karosserien ca. 12 m x 5 m x 5 m). In diesen Kabinen befinden sich Walzen mit Emufedern, an welchen die Karosserie entlangläuft und dabei grob gereinigt wird. Ferner wird mit einem starken Absaugstrom (ca. 30.000 m³/h gearbeitet).

Eine derartige Ausführung weist einen großen Platzbedarf auf, ferner entsteht aufgrund des großen Absaugvolumens ein hoher Energiebedarf. Schließlich wird die betreffende Reinigung nicht immer als ausreichend angesehen. Außerdem ist eine Anpassung an verschiedene Karosserieformen nur bedingt möglich bzw. mit entsprechenden Anpassungsarbeiten verbunden.

Mit der eingangs erwähnten Vorrichtung wird zwar grundsätzlich eine Vorrichtung zum Reinigen oder Feinbearbeiten von Werkstücken geschaffen, bei der eine Anpassung an verschieden geformte Werkstückoberflächen ermöglicht ist. Jedoch ist die Konstruktion wegen des für jede Walze erforderlichen separaten Antriebs sehr aufwändig.

Aus der FR 2 635 024 A1 ist eine weitere Vorrichtung zum Reinigen von Werkstücken bekannt, die einen Tank aufweist, der gegenüber der Werkstückoberfläche offen ist, wobei der Tank an einem Ende eines beweglichen Arms vorgesehen ist, dessen anderes Ende flexibel zur Anlage an der Werkstückoberfläche ausgebildet ist und Flüssigkeit aus dem Tank auf die Werkstückoberfläche zur Reinigung übertragen werden kann.

Aus der US 3 601 832 ist eine weitere Reinigungsvorrichtung mit einer Vielzahl von Rollen bekannt, die flexibel an eine Oberfläche für Reinigungszwecke anlegbar sind.

Aus der EP 0 808 753 A1 ist ferner eine Wachanlage mit vertikal zu einem Fahrzeug ausgerichteten und relativ dazu verschiebbaren Waschbürsten bekannt.

Vor diesem Hintergrund liegt der Erfindung die Aufgabe zugrunde, eine Vorrichtung zum Reinigen von Werkstücken anzugeben, die insbesondere zum Reinigen von Autokarosserien oder anderen Teilen, wie etwa Rotorblättern für Windräder, vor einer Lackierung geeignet ist. Hierbei soll insbesondere eine größere Flexibilität als bei herkömmlichen Anordnungen geschaffen werden, insbesondere eine Anpassung an unterschiedliche Werkstückoberflächen ermöglicht werden.

Diese Aufgabe wird erfindungsgemäß durch eine Vorrichtung gemäß Anspruch 1 gelöst.

Die Aufgabe der Erfindung wird auf diese Weise vollkommen gelöst.

Erfindungsgemäß wird nunmehr eine Vorrichtung bereitgestellt, die unmittelbar mit einer Handlingeinrichtung, wie einem Roboter oder einem Portal, verbunden werden kann und mit Hilfe der Handlingeinrichtung gezielt an der Werkstückoberfläche entlanggeführt werden kann, um diese zu reinigen. Durch die gleichzeitige Absaugung von Luft mittels der Absaugeinrichtung wird hierbei eine sehr wirkungsvolle Reinigung gewährleistet. Durch die erfindungsgemäß ermöglichte winkelmäßige Verstellung der Walzen zueinander lässt sich eine Anpassung an unterschiedliche Werkstückoberflächen auf einfache Weise realisieren. Gelenke zwischen der mittleren Walze und den äußeren Walzen werden auf diese Weise zur Lagerung der äußeren Walzen genutzt.

An jeder Walze ist eine Bürste aufgenommen. Je nach Aufbau der Bürste kann die Vorrichtung für unterschiedliche Reinigungsarbeiten verwendet werden, etwa zum Reinigen, insbesondere Entstauben von Werkstücken vor einer nachfolgenden Lackierung, oder aber auch zum Polieren, Schleifen oder Aktivieren von Werkstücken.

Jede Walze weist bevorzugt einen zentralen Walzenkörper auf, an dessen Außenumfang eine vorzugsweise aus Kunststoff bestehende Bürste befestigt ist. Der Walzenkörper besteht bevorzugt aus Kunststoff.

Auf diese Weise kann der Walzenkörper zur Aufhängung und zum Antrieb der Walze genutzt werden, während eine Bürste darauf auswechselbar befestigt sein kann.

Bei der bevorzugten Anwendung, zum Reinigen von Autokarosserien oder vergleichbaren Werkstücken vor einer nachfolgenden Lackierungsbehandlung, können die Filamente der Bürsten beispielsweise aus einem Kunststoff, wie etwa Polyamid PA 6.12 mit einer Stärke von 0,2 mm bestehen.

Beliebige andere Bürsten für andere Anwendungen sind denkbar.

In bevorzugter Weiterbildung der Erfindung ist jeder Walze eine Ionisierungseinrichtung zugeordnet.

Hierdurch können Staubpartikel neutralisiert werden, damit diese nicht an der zu reinigenden Oberfläche anhaften und abgesaugt werden können.

Gemäß einer weiteren Ausgestaltung der Erfindung sind die Walzen nebeneinander axial miteinander fluchtend angeordnet und mittels mindestens eines Stelltriebs zueinander winkelmäßig stufenlos verstellbar.

Auf diese Weise ist eine besonders vorteilhafte Anpassung an unterschiedliche Werkstückkonturen ermöglicht.

Vorzugsweise sind die Walzen zueinander in einem gewissen Bereich nach außen konvex und/oder konkav verstellbar.

Somit kann eine Anpassung an unterschiedliche Werkstückkonturen ermöglicht werden.

Gemäß einer weiteren Ausgestaltung der Erfindung ist hierzu eine der Walzen an ihrem äußeren Ende über einen axialen Antriebsstutzen mit dem Antrieb gekoppelt und mit den anderen Walzen über Gelenke, insbesondere Kreuzgelenke, zu deren Antrieb gekoppelt.

Auf diese Weise lässt sich ein gemeinsamer Antrieb für mehrere Walzen in besonders einfacher Weise realisieren.

In zusätzlicher Weiterbildung dieser Ausführung weist der Antrieb für die äußere Walze einen Antriebsmotor auf, der an einer der Schwingen aufgenommen ist und mit der Walze gekoppelt ist, vorzugsweise mittels mindestens einer Zwischenwelle und zugeordneten Kopplungsmitteln.

Auf diese Weise kann der Antrieb gemeinsam mit einer der beiden Schwingen bewegt werden und gleichzeitig zum Antrieb der miteinander gekoppelten Walzen verwendet werden.

Jede Walze weist bevorzugt eine zentralen Walzenkörper auf, der vorzugsweise aus Kunststoff besteht und an dem die Lagerung der Walze und der Drehantrieb der Walze ausgebildet ist.

In weiterer Ausgestaltung der Erfindung weist jeder Zahntrieb eine gekrümmte Zahnstange auf, die von einem Ritzel angetrieben ist.

Auf diese Weise lässt sich eine stufenlose Verstellbarkeit der äußeren Walzen in Bezug auf die mittlere Walze erreichen.

Vorzugsweise ist hierbei die Anordnung so getroffen, dass bei jedem Zahntrieb das Ritzel um eine Achse drehbar ist, die durch eine Radialebene der mittleren Walze verläuft, die auch das zentrale Gelenk der zugeordneten Walze einschließt.

Auf diese Weise ist eine einfache Winkelverstellung der äußeren Walzen in Bezug auf die mittlere Walze ermöglicht, wobei gleichzeitig die jeweilige Gelenkverbindung zum Drehantrieb zwischen den einzelnen Walzen zur Lagerung der Walzen an diesen Enden genutzt werden kann, während die Aufnahme der äußeren Walzen jeweils an dem Ende der zugeordneten Schwinge erfolgt.

Gemäß einer weiteren Ausgestaltung der Erfindung ist jeder Zahntrieb mit einem Stellmotor gekoppelt.

Auf diese Weise können beide äußeren Walzen unabhängig voneinander in Bezug auf die mittlere Walze winkelmäßig verstellt werden.

Gemäß einer weiteren Ausgestaltung der Erfindung ist jede Walze in ihrer Drehzahl stufenlos verstellbar, vorzugsweise in einem Bereich von 0 bis 400 1/min, weiter bevorzugt von 0 bis 300 1/min.

Gemäß einer weiteren Ausgestaltung der Erfindung ist die Drehrichtung der Walze(n) umkehrbar.

Durch diese Maßnahmen ist eine besonders gute Anpassung der Walzen an die jeweilige Bearbeitungsaufgabe ermöglicht.

Gemäß einer weiteren Ausgestaltung der Erfindung ist jeder Bürste mindestens ein Rakel zugeordnet, das an der Bürste anliegt, um anhaftende Partikel abzustreifen.

Auf diese Weise werden anhaftende Partikel, insbesondere Staubpartikel, wirkungsvoll von der Bürste entfernt.

Durch die Erfindung wird ferner ein System zum Reinigen oder Feinbearbeiten von Werkstücken bereitgestellt, mit einer Handlingeinrichtung, insbesondere einem Roboter oder einem Portal, an dem eine Vorrichtung gemäß der vorstehend genannten Art aufgenommen ist.

Hierbei ist die Vorrichtung vorzugsweise mittels eines Flansches an einen bewegbaren Arm der Handlingeinrichtung angekoppelt.

Weiter bevorzugt weist das System mindestens eine Steuerung zur automatischen Steuerung zumindest einer Bewegung der Handlingeinrichtung oder einer Winkelposition der Walzen zueinander oder einer Drehzahl der Walzen oder einer Drehrichtung der Walzen oder einer Spannung einer zugeordneten Ionisierungseinrichtung auf.

Auf diese Weise ist eine automatische Steuerung ermöglicht, die auch in ein übergeordnetes Steuersystem der Gesamtanlage integriert werden kann oder unmittelbar mit der Steuerung der Handlingeinrichtung gekoppelt werden kann.

In einer Weiterbildung des erfindungsgemäßen Verfahrens wird die Reinigungseinrichtung automatisch an der Werkstückoberfläche entlanggefahren und mit einer Mehrzahl von Walzen an eine Kontur der Werkstückoberfläche angepasst.

Auf diese Weise wird eine automatische Bearbeitung ermöglicht.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine perspektivische Ansicht einer erfindungsgemäßen Vorrichtung;
- Fig. 2: einen Längsschnitt durch die Vorrichtung gemäß Fig. 1, wobei die Schnittebene durch II-II angedeutet ist;
- Fig. 3: einen Schnitt durch die Vorrichtung längs der Linie III-III gemäß Fig. 2;
- Fig. 4: eine perspektivische Ansicht der Vorrichtung gemäß Fig. 1, bei der das Gehäuse teilweise freigeschnitten ist und mit V ein Ausschnitt angedeutet ist;
- Fig. 5: den Ausschnitt V gemäß Fig. 4 in vergrößerter, perspektivischer Darstellung;
- Fig. 6: die Vorrichtung gemäß Fig. 2, jedoch in einer veränderten Position, in der die äußeren Walzen in Bezug auf die mittlere Walze nach außen hin verschwenkt sind;
- Fig. 7: eine Seitenansicht der Vorrichtung gemäß Fig. 6 in verkleinerter Darstellung und
- Fig. 8: ein System mit einer Handlingeinrichtung in Form eines Roboters und einer Vorrichtung gemäß Fig. 7, die am Ende eines Roboterarms aufgenommen ist und an eine Werkstückoberfläche in Form einer Rohkarosse angeschwenkt ist, um diese zu reinigen.

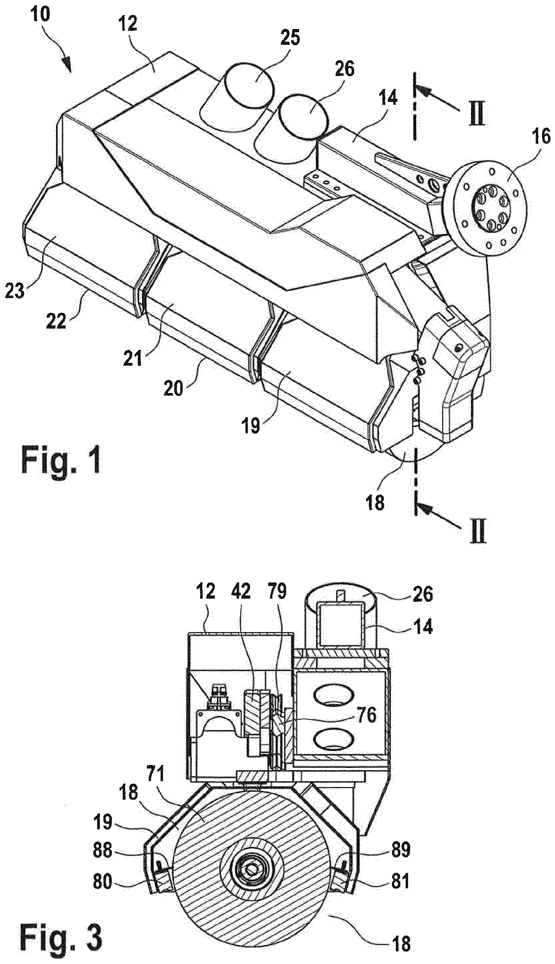

In Fig. 1 ist eine erfindungsgemäße Vorrichtung zum Reinigen oder Feinbearbeiten von Werkstücken perspektivisch dargestellt und insgesamt mit der Ziffer 10 bezeichnet.

Die Vorrichtung 10 weist ein Gehäuse 12 auf, das an einem Träger 14 aufgenommen ist und an dessen äußerem Ende ein Flansch 16 zur Ankopplung an eine beliebige Handlingeinrichtung vorgesehen ist.

Am unteren Ende des Gehäuses 12 sind drei Walzen 18, 20, 22 hintereinander angeordnet und axial miteinander ausgerichtet. Jede Walze 18, 20, 22 ist an beiden Seiten von einer Abdeckung 19, 21, 23 abgedeckt, so dass (wie aus Fig. 3 ersichtlich) an der Walze 18, 20, 22 ein freiliegender Abschnitt gebildet ist, der zur Werkstückbearbeitung dient, während ein größerer Teil der Walze18, 20, 22 vollständig von der zugeordneten Abdeckung 19, 21, 23 abgedeckt ist und somit an eine Absaugeinrichtung angeschlossen werden kann.

Gemäß Fig. 1 sind am oberen Ende des Gehäuses nebeneinander zwei Anschlussstutzen 25, 26 angeordnet, die über einen geeigneten Absaugschlauch mit einer Absaugeinrichtung (nicht dargestellt) gekoppelt werden. Die Anschlussstutzen 25, 26 sind innerhalb des vom Gehäuse 12 umschlossenen Hohlraums nicht näher dargestellter Weise mit den von den Abdeckungen 19, 21, 23 an jeder Walze 18, 20, 22 gebildeten Hohlräumen verbunden. Auf diese Weise kann eine wirkungsvolle Absaugung an jeder Walze 18, 20, 22 gewährleistet werden.

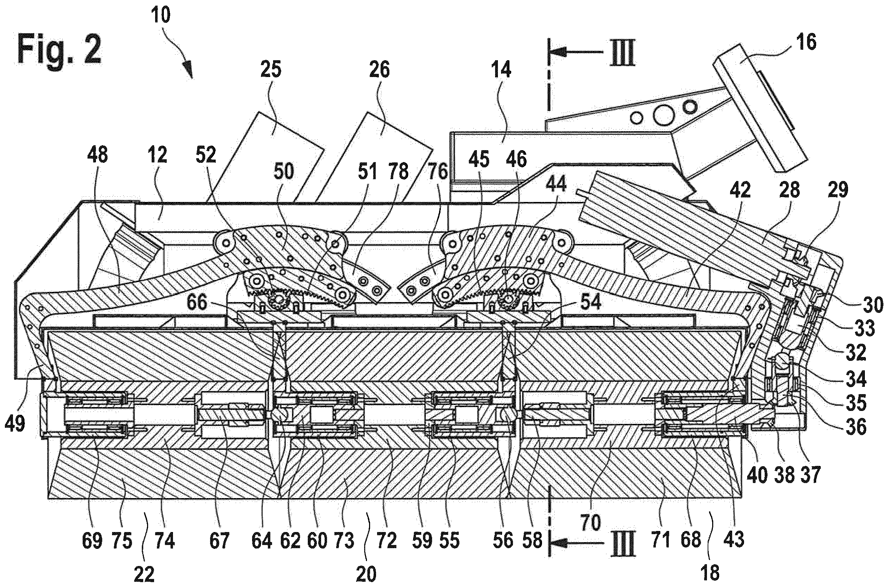

Gemäß Fig. 2 besteht jede Walze 18, 20, 22 aus einem zentralen Walzenkörper 70, 72, 74 aus Kunststoff, z.B. Polyamid, mit zylindrischen Außenumfang und einer darauf aufgenommenen Bürste 71, 73, 75. Die einzelnen Borsten bestehen beispielsweise aus Polyamid, insbesondere aus Polyamid PA 6.12 mit einer Stärke von 0,2 mm bestehen.

Eine derartige Ausgestaltung ist besonders geeignet, um Automobilkarosserien vor der Lackierung zu reinigen.

Die Walzen 18, 20, 22 sind mittels eines gemeinsamen Antriebes in einem Drehzahlbereich von 0 bis 300 1/min um ihre Längsachse rotierend antreibbar.

Die mittlere Walze 20 ist an ihren beiden axialen Enden am Walzenkörper 72 jeweils über ein Drehlager 55, 60 an Trägern 54, 66 drehbar gelagert.

Die beiden äußeren Walzen 18, 22 sind an einem ersten Ende jeweils über ein Gelenk 56, 64, das als Kreuzgelenk ausgebildet ist und auch zum Drehantrieb dient, gelenkig mit der mittleren Walze verbunden. An den äußeren Enden sind die beiden äußeren Walzen 18, 22 jeweils an einer Schwinge 42, 48 gehalten und können mittels eines Zahntriebes 45, 46 bzw. 51, 52 am anderen Ende der Schwinge 42, 48 stufenlos gegenüber der mittleren Walze 22 verschwenkt werden. Die beiden Schwingen 42, 48 weisen eine im Wesentlichen L-förmige Form auf, wobei der kurze Schenkel der jeweiligen Schwinge 42 bzw. 48 um das axiale Ende der betreffenden Walze 18 bzw. 22 herumragt und über ein Drehlager 68 bzw. 69 damit drehbar verbunden ist.

Zum gemeinsamen Antrieb der Walzen 18, 20, 22 ist ein Antriebsmotor 28 an der ersten Schwinge 42 befestigt. Der Antriebsmotor 28 treibt über seine Motorwelle ein Kegelradgetriebe 29, 30 an, von dem eine Zwischenwelle 32 angetrieben wird. Die Zwischenwelle 32 ist mittels eines Lagers 33 in einem umschließenden Gehäuseteil drehbar gelagert und an ihrem Ende über ein Gelenk 34 in Form eines Kreuzgelenkes mit einer weiteren Zwischenwelle 36 gekoppelt. Diese ist gleichfalls mittels eines Lagers 35 drehbar gelagert. Die zweite Zwischenwelle 36 treibt schließlich über ein weiteres Kegelradgetriebe 37, 38 einen Antriebsstutzen 40 am Walzenkörper 70 der ersten Walze 18 an.

Am anderen Ende des Walzenkörpers 70 ist dieser über eine Aufnahme 58 mit dem als Kreuzgelenk ausgebildeten Gelenk 56 verbunden, das über eine zugeordnete Aufnahme 59 mit dem Walzenkörper 72 der mittleren Walze 20 gekoppelt ist. Der Walzenkörper 72 ist am anderen Ende wiederum über eine Aufnahme 62 mit dem weiteren als Kreuzgelenk ausgebildeten Gelenk 64 gekoppelt. So wird die Drehbewegung des Walzenkörpers 72 über das Kreuzgelenk auf die dritte Walze 22 übertragen, wozu wiederum eine Aufnahme 67 am dritten Walzenkörper 74 mit dem Gelenk 64 gekoppelt ist.

Somit lassen sich alle drei Walzenkörper 70, 72, 74 mittels des gemeinsamen Antriebsmotors 28 drehbar antreiben.

Die Gelenke 56, 64 zwischen dem Walzenkörper 72 der mittleren Walze 20 und in den beiden äußeren Walzenkörpern 70, 74 der äußeren Walzen 18, 22 dienen somit einerseits zur Lagerung der Walzenkörper 70, 74 und andererseits zur Übertragung des Drehmoments zwischen benachbarten Walzenkörpern 70, 72, 74.

Die Schwingen 42, 48 sind mittels ihres jeweiligen Zahntriebes 45, 46 bzw. 51, 52 derart verstellbar, dass aus der in Fig. 2 dargestellten axial fluchtenden Position der Walzen 18, 20, 22 ein Verfahren der Enden 44 bzw. 50 der Schwingen 42 bzw. 48 um einen gewissen Betrag nach innen und um einen größeren Betrag nach außen ermöglicht ist.

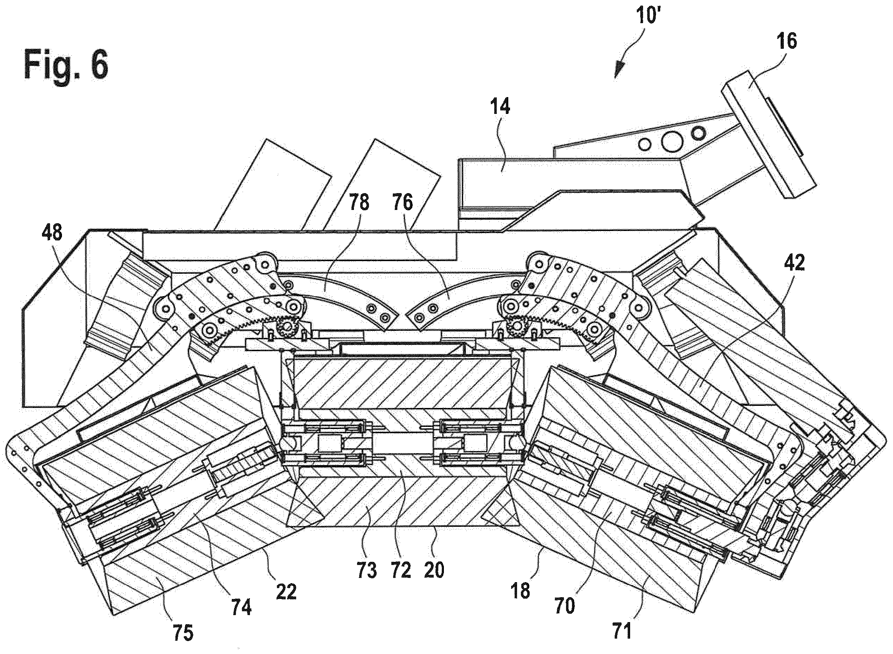

Damit wird einerseits eine Verschwenkung der Walzen 18 bzw. 22 um einen gewissen Betrag nach innen ermöglicht, so dass sich eine konvexe Anordnung der Walzen 18, 20, 22 ergibt. Andererseits können die Enden 44 bzw. 50 mittels der Ritzel 46 bzw. 52 nach außen verfahren werden, so dass sich die anderen Enden 43 bzw. 49 der Schwingen 42 bzw. 48 nach außen bewegen, so dass sich eine Stellung gemäß Fig. 6 ergibt, die insgesamt mit 10' bezeichnet ist. In dieser Stellung ergibt sich eine konkave Anordnung der Walzen 18, 20, 22.

Die Schwingen 42, 48 sind gemäß Fig. 3 an ihrer Rückseite mit Führungsrollen 79 versehen, die an zugeordneten Führungsschienen 76 anliegen, um die Schwingen 42, 48 entlang ihrer Haupterstreckungsrichtung zu führen.

Die betreffenden Führungen 76, 78 sind in Fig. 2 und in Fig. 6 erkennbar.

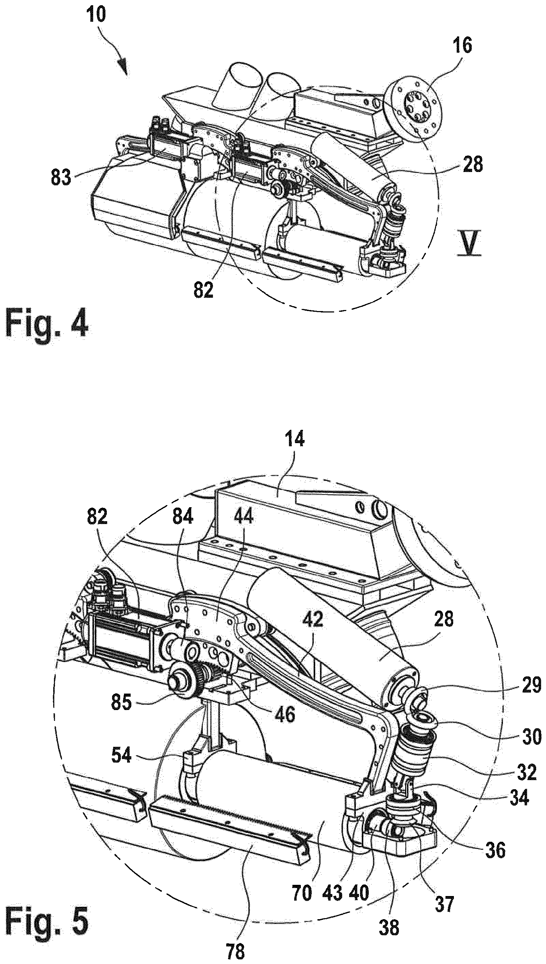

Zum Antrieb der Ritzel 46, 52 ist jeweils ein Antriebsmotor 82, 83 vorgesehen (Fig. 4), der über zwei Zahnräder 84, 85 (vgl. Fig. 5) mit den jeweiligen Ritzeln 46 bzw. 52 gekoppelt ist (Fig. 5 zeigt nur den Antriebsmotor 82, der über die beiden Zahnräder 84, 85 mit dem Ritzel 46 gekoppelt ist).

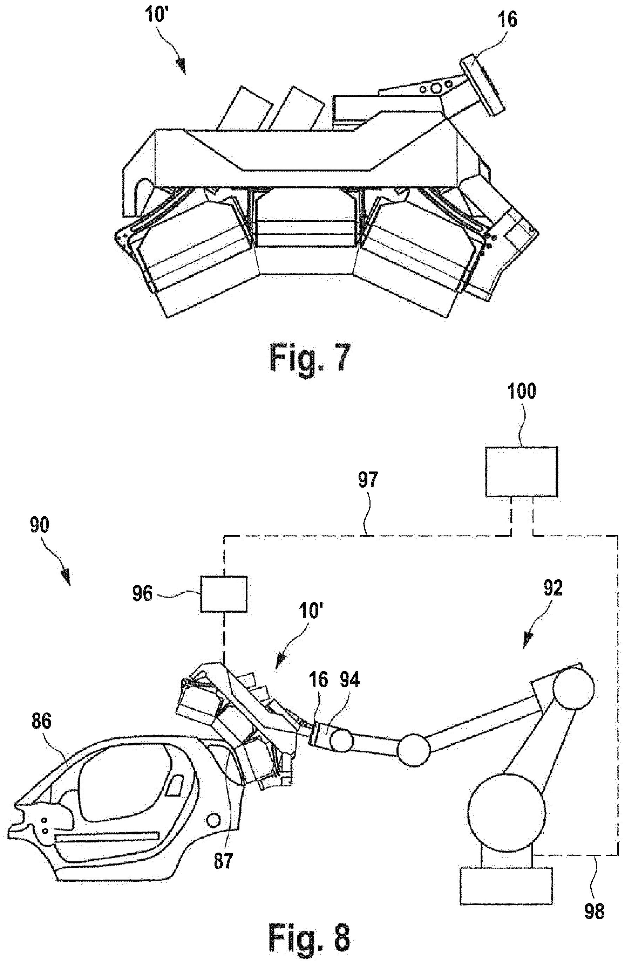

Somit ist jede der beiden äußeren Walzen 18, 22 unabhängig von derjeweils anderen Walze 18, 22 über einen eigenen Stelltrieb in Bezug auf die mittlere Walze 20 verstellbar. Es ergibt sich eine Verstellmöglichkeit von etwa + 25° (konkave Stellung gemäß Fig. 6 und 7) und etwa - 8° bis -10° (konvexe Stellung, nicht dargestellt).

Die Ritzel 46 bzw. 52 sind jeweils in einer gemeinsamen Radialebene mit den zugeordneten Kreuzgelenken 56 bzw. 64 der Walze 20 in einer Verlängerung des zugeordneten Trägers 54 bzw. 66 angeordnet (vgl. Fig. 5).

Wie aus Fig. 3 zu ersehen ist, sind an jeder Walze 18, 20, 22 im Bereich des äußeren Endes der zugeordneten Abdeckung 19, 21, 23 jeweils ein Ionisierungsstab 80, 81 angeordnet, der mit einer geeignete Spannung beaufschlagt werden kann, um eine Neutralisierung von geladenen Staubpartikeln zu ermöglichen, so dass sich diese nicht mehr auf der Werkstückoberfläche absetzen und leicht abgesaugt werden können.

Ferner ist angrenzend an jeden lonisierungsstab 80, 81 ein Rakel 88, 89 angeordnet. Die Rakel 88, 89 haben an ihrer Kante Zähne, die von außen an den Bürsten 71 anliegen, um so eventuell anhaftende Staubpartikel abzustreifen.

Fig. 8 zeigt die erfindungsgemäße Vorrichtung 10' als Teil eines Systems 90 zur Reinigung von Automobil-Rohkarossen (Werkstück 86).

Gemäß Fig. 8 ist eine Handlingeinrichtung 92 in Form eines Roboters vorgesehen, an dessen äußerem beweglichem Arm 94 die Vorrichtung 10' über den Flansch 16 angekoppelt ist. Die Vorrichtung 10' weist eine Steuerung auf, die mit 96 angedeutet ist. Die Steuerung 96 ermöglicht eine Steuerung zumindest der Drehzahl des Antriebsmotors 28, vorzugsweise im Bereich von 0 bis 300 1/min, ferner eine Umkehrung der Drehrichtung, des Weiteren eine individuelle Steuerung der beiden Antriebe 82, 83 zur Winkelverstellung der äußeren Walzen 18, 22.

Sinnvollerweise ist die Steuerung der Vorrichtung 10' in geeigneter Weise mit der Steuerung der Handlingeinrichtung 92 entweder unmittelbar oder über eine übergeordnete zentrale Steuerung 100 gekoppelt, wie durch die Leitungen 97, 98 angedeutet ist.

Die Vorrichtung 10 bzw. 10' kann somit von der Handlingeinrichtung 92 entlang einer Werkstückoberfläche 87 bewegt werden und dabei in geeigneter Weise gesteuert werden, um eine optimale Reinigungswirkung zu erreichen.

Durch die winkelmäßige Verstellbarkeit der beiden äußeren Walzen 18, 22 in Bezug auf die mittlere Walze 20, durch die stufenlose Steuerung der Drehzahl der Walzen 18, 20, 22, die mögliche Drehrichtungsumkehr und die individuelle Steuerung der Winkelposition der Walzen 18, 20, 22 zueinander, ist eine optimale Anpassung an die Gegebenheiten eines jeweiligen Werkstückes 84 und an die betreffende Reinigungsaufgabe ermöglicht.

## Patentansprüche

1. Vorrichtung zum Reinigen oder Feinbearbeiten von Werkstücken (86), mit einem Gehäuse (12), an dem ein Anschluss (16) zur Verbindung mit einer Handlingeinrichtung (92) vorgesehen ist, mit einem Antriebsmotor (28) zum Antrieb mindestens zweier Walzen (18, 20, 22) zur Behandlung eines Werkstücks (86), wobei die Walzen (18, 20, 22) jeweils eine Abdeckung (19, 21, 23) aufweisen, mit einer Absaugeinrichtung (25, 26) gekoppelt sind und relativ zueinander verstellbar sind, und wobei eine mittlere Walze (20) an ihren beiden Enden mittels Drehlagern (55, 60) an Trägern (54, 66) gelagert ist, **dadurch gekennzeichnet, dass** die Walzen (18, 20, 22) von einem gemeinsamen Antrieb (28) angetrieben sind, dass auf jeder Seite der mittleren Walze (20) eine weitere Walze (18, 22) über ein zentrales Gelenk (56, 64) angekoppelt ist, und dass die äußeren Walzen (18, 22) an ihren äußeren Enden jeweils an Schwingen (42, 48) gehalten sind, die an ihrem anderen Ende jeweils mittels eines Zahntriebes (45, 46, 51, 52) verstellbar sind.

2. Vorrichtung nach Anspruch 1, **dadurch gekennzeichnet, dass** die Walze (18, 20, 22) eine Bürste (72, 73, 75) aufweist, die vorzugsweise zum Reinigen von Werkstücken (84), insbesondere Autokarrosserien oder Rotorblättern für Windräder, vor einem Beschichtungsvorgang, insbesondere einem Lackiervorgang, ausgebildet ist.

3. Vorrichtung nach Anspruch 1 oder 2, **dadurch gekennzeichnet, dass** jede Walze (18, 20, 22) einen zentralen Walzenkörper (70, 72, 74) aufweist, an dessen Außenumfang eine vorzugsweise aus Kunststoff bestehende Bürste befestigt ist.

4. Vorrichtung nach einem der vorhergehenden Ansprüche, **dadurch gekennzeichnet, dass** jeder Walze (18, 20, 22) eine Ionisierungseinrichtung (80, 81) zugeordnet ist.

5. Vorrichtung nach einem der vorhergehenden Ansprüche, **dadurch gekennzeichnet, dass** die Walzen nebeneinander axial miteinander fluchtend angeordnet sind und mittels mindestens eines Stelltriebs (45, 46, 51, 52) zueinander winkelmäßig stufenlos verstellbar sind.

6. Vorrichtung nach Anspruch 5, **dadurch gekennzeichnet, dass** die Walzen (18, 20, 22) zueinander nach außen konvex und/oder konkav verstellbar sind.

7. Vorrichtung nach einem der vorhergehenden Ansprüche, **dadurch gekennzeichnet, dass** eine der Walzen (18) an ihrem äußeren Ende über einen axialen Antriebsstutzen (40) mit dem Antrieb (28) gekoppelt ist und mit den anderen Walzen (20, 22) über Gelenke (56, 64), insbesondere Kreuzgelenke, zu deren Antrieb gekoppelt ist.

8. Vorrichtung nach Anspruch 7, **dadurch gekennzeichnet, dass** der Antrieb für die äußere Walze (18) einen Antriebsmotor (28) aufweist, der an einer der Schwingen (42) aufgenommen ist und mit der Walze (18) gekoppelt ist, vorzugsweise mittels mindestens einer Zwischenwelle (32, 36) und zugeordneten Kopplungsmitteln (29, 30, 34, 37, 38).

9. Vorrichtung nach einem der vorhergehenden Ansprüche, **dadurch gekennzeichnet, dass** jeder Zahntrieb (45, 46, 50, 51) eine gekrümmte Zahnstange (45, 51) aufweist, die von einem Ritzel (46, 52) angetrieben ist.

10. Vorrichtung nach Anspruch 8, **dadurch gekennzeichnet, dass** bei jedem Zahntrieb das Ritzel (46, 52) um eine Achse drehbar ist, die durch eine Radialebene der mittleren Walze (20) verläuft, die auch das zentrale Gelenk (56, 64) der zugeordneten Walze (20) einschließt.

11. Vorrichtung nach einem der vorhergehenden Ansprüche, **dadurch gekennzeichnet, dass** jeder Zahntrieb (45, 46, 51, 52) mit einem Stellmotor (82, 83) gekoppelt ist.

12. Vorrichtung nach einem der vorhergehenden Ansprüche, **dadurch gekennzeichnet, dass** jede Walze (18, 20, 22) in ihrer Drehzahl stufenlos verstellbar ist, vorzugsweise in einem Bereich von 0 bis 400 1/min, weiter bevorzugt von 0 bis 300 1/min.

13. Vorrichtung nach einem der vorhergehenden Ansprüche, **dadurch gekennzeichnet, dass** die Drehrichtung der Walze(n) (18, 20, 22) umkehrbar ist.

14. Vorrichtung nach einem der Ansprüche 2 bis 13, **dadurch gekennzeichnet, dass** jeder Bürste (71, 73, 75) mindestens ein Rakel (88, 89) zugeordnet ist, das an der Bürste anliegt, um anhaftende Partikel abzustreifen.

15. System zum Reinigen oder Feinbearbeiten von Werkstücken (86), mit einer Handlingeinrichtung (92), insbesondere einem Roboter oder einem Portal, an dem eine Vorrichtung (10) gemäß einem der vorhergehenden Ansprüche aufgenommen ist, wobei die Vorrichtung (10) vorzugsweise mittels eines Flansches (16) an einen bewegbaren Arm (94) der Handlingeinrichtung (92) angekoppelt ist.

## Claims

1. A device for cleaning or precision machining of workpieces (86), comprising a housing (12), whereon a port (16) for connecting with a handling device is provided, comprising a drive motor (28) for driving at least two rollers (18, 20, 22) for treating a workpiece (86), wherein the rollers (18, 20, 22) each comprise a cover (19, 21, 23), are coupled to a suction device (25, 26) and are adjustable with respect to each other, wherein a central roller (20) at its both ends is supported by means of rotary bearings (55, 60) on carriers (54, 66), **characterized in that** the rollers (18, 20, 22) are driven by a common drive (28), **in that** at each side of the central roller (20) a further roller (18, 22) is coupled by means of a central joint (56, 64), and **in that** the outer rollers (18, 22) at their outer ends are each held on wings (42, 48), which at their other ends each can be adjusted by means of a pinion gear (45, 46, 51, 52).

2. The device of claim 1, **characterized in that** the roller (18, 20, 22) comprises a brush (72, 73, 75), which preferably is configured for cleaning of workpieces (84), in particular automobile bodies or rotor blades for wind wheels prior to a coating step, in particular a painting step.

3. The device of claim 1 or 2, **characterized in that** each roller (18, 20, 22) comprises a central roller body (70, 72, 74) at the outer perimeter of which a brush, preferably consisting of plastic, is secured.

4. The device of any of the preceding claims, **characterized in that** to each roller (18, 20, 22) there is assigned an ionization device (80, 81).

5. The device of any of the preceding claims, **characterized in that** the rollers are arranged side by side in axial alignment with each other and can be angularly continuously adjusted with respect to each other by means of an adjusting drive (45, 46, 51, 52).

6. The device of claim 5, **characterized in that** the two rollers (18, 20, 22) can be adjusted with respect to each other convexly to the outside and/or concavely.

7. The device of any of the preceding claims, **characterized in that** one of the rollers (18) at its outer end is coupled by means of an axial drive fitting (40) to the drive (28) and is coupled to the other rollers (20, 22) by means of joints (56, 64), in particular universal joints, for driving the latter.

8. The device of 7, **characterized in that** the drive for the outer roller (18) comprises a drive motor (28) that is received on one of the wings (42) and that is coupled with the roller (18), preferably by means of at least one intermediate shaft (32, 36) and by means of assigned coupling means (29, 30, 34, 37, 38).

9. The device of any of the preceding claims, **characterized in that** each pinion gear (45, 46, 50, 51) comprises a bent rack (45, 51) that is driven by a pinion (46, 52).

10. The device of claim 8, **characterized in that** at each pinion gear the pinion (46, 52) is rotatable about an axis that extends through a radial plane of the central roller (20) that also includes the central joint (56, 64) of the assigned roller (20).

11. The device of any of the preceding claims, **characterized in that** each pinion gear (45, 46, 51, 52) is coupled to an adjusting motor (82, 83).

12. The device of any of the preceding claims, **characterized in that** each roller (18, 20, 22) can be adjusted continuously with respect to its revolution speed, preferably within a range of 0 to 400 1/min, more preferably of 0 to 300 1/min.

13. The device of any of the preceding claims, wherein the direction of rotation of the roller(s) (18, 20, 22) can be reversed.

14. The device of any of claims 2 to 13, wherein to each brush (71, 73, 75) there is assigned at least one doctor blade (88, 89) that rests against the brush for stripping off adherent particles.

15. A system for cleaning or precision machining of workpieces (86) comprising a handling device (92), in particular a robot or a portal, whereon a device (10) according to any of the preceding claims is received, wherein the device (10) by means of a flange (16) is preferably coupled to a movable arm (94) of the handling device (92).

## Revendications

1. Dispositif pour le nettoyage ou la finition de pièces (86), avec un boîtier (12), sur lequel est prévu un raccord (16) pour la liaison à un appareil de manipulation (92), avec un moteur d'entraînement (28) pour l'entraînement d'au moins deux rouleaux (18, 20, 22) pour le traitement d'une pièce (86), les rouleaux (18, 20, 22) présentant chacun un recouvrement (19, 21, 23), étant couplés à un appareil d'aspiration (25, 26) et étant réglables l'un par rapport à l'autre, et un rouleau central (20) étant monté à ses deux extrémités au moyen de paliers rotatifs (55, 60) sur des supports (54, 66), **caractérisé en ce que** les rouleaux (18, 20, 22) sont entraînés par un entraînement commun (28), **en ce que**, de chaque côté du rouleau central (20), un autre rouleau (18, 22) est couplé par l'intermédiaire d'une articulation centrale (56, 64), et **en ce que** les rouleaux extérieurs (18, 22) sont maintenus à leurs extrémités extérieures respectivement sur des bielles (42, 48) qui sont réglables à leur autre extrémité respectivement au moyen d'un engrenage (45, 46, 51, 52).

2. Dispositif selon la revendication 1, **caractérisé en ce que** le rouleau (18, 20, 22) présente une brosse (72, 73, 75) qui est de préférence configurée pour le nettoyage de pièces (84), notamment de carrosseries automobiles ou de pales de rotor d'éoliennes, avant une opération de revêtement, notamment une opération de peinture.

3. Dispositif selon la revendication 1 ou 2, **caractérisé en ce que** chaque rouleau (18, 20, 22) présente un corps de rouleau central (70, 72, 74) sur la périphérie extérieure duquel est fixée une brosse, de préférence constituée de matière plastique.

4. Dispositif selon l'une quelconque des revendications précédentes, **caractérisé en ce que** chaque rouleau (18, 20, 22) est associé à un appareil d'ionisation (80, 81).

5. Dispositif selon l'une quelconque des revendications précédentes, **caractérisé en ce que** les rouleaux sont agencés côte à côte alignés axialement les uns avec les autres, et sont réglables angulairement les uns par rapport aux autres en continu au moyen d'au moins un mécanisme de commande (45, 46, 51, 52).

6. Dispositif selon la revendication 5, **caractérisé en ce que** les rouleaux (18, 20, 22) sont réglables vers l'extérieur de manière convexe et/ou concave les uns par rapport aux autres.

7. Dispositif selon l'une quelconque des revendications précédentes, **caractérisé en ce que** l'un des rouleaux (18) est couplé à son extrémité extérieure à l'entraînement (28) par l'intermédiaire d'un embout d'entraînement axial (40) et est couplé aux autres rouleaux (20, 22) par l'intermédiaire d'articulations (56, 64), notamment d'articulations croisées, pour leur entraînement.

8. Dispositif selon la revendication 7, **caractérisé en ce que** l'entraînement pour le rouleau extérieur (18) présente un moteur d'entraînement (28) qui est reçu sur l'une des bielles (42) et qui est couplé au rouleau (18), de préférence au moyen d'au moins un arbre intermédiaire (32, 36) et de moyens de couplage associés (29, 30, 34, 37, 38).

9. Dispositif selon l'une quelconque des revendications précédentes, **caractérisé en ce que** chaque engrenage (45, 46, 50, 51) présente une crémaillère courbe (45, 51), qui est entraînée par un pignon (46, 52).

10. Dispositif selon la revendication 8, **caractérisé en ce que**, pour chaque engrenage, le pignon (46, 52) peut tourner autour d'un axe qui passe par un plan radial du rouleau central (20), qui inclut également l'articulation centrale (56, 64) du rouleau associé (20).

11. Dispositif selon l'une quelconque des revendications précédentes, **caractérisé en ce que** chaque engrenage (45, 46, 51, 52) est couplé à un servomoteur (82, 83).

12. Dispositif selon l'une quelconque des revendications précédentes, **caractérisé en ce que** chaque rouleau (18, 20, 22) est réglable en continu en vitesse de rotation, de préférence dans une plage allant de 0 à 400 1/min, de manière davantage préférée de 0 à 300 1/min.

13. Dispositif selon l'une quelconque des revendications précédentes, **caractérisé en ce que** la direction de rotation du ou des rouleaux (18, 20, 22) est réversible.

14. Dispositif selon l'une quelconque des revendications 2 à 13, **caractérisé en ce qu'**à chaque brosse (71, 73, 75) est associée au moins une racle (88, 89) qui s'applique contre la brosse pour racler les particules adhérentes.

15. Système de nettoyage ou de finition de pièces (86), avec un appareil de manipulation (92), notamment un robot ou un portique, sur lequel est reçu un dispositif (10) selon l'une quelconque des revendications précédentes, le dispositif (10) étant couplé, de préférence au moyen d'une bride (16), à un bras mobile (94) de l'appareil de manipulation (92).
